# EUROPEAN PATENT SPECIFICATION

(11) **EP 4 349 050 B1**
(45) Date of publication and mention of the grant of the patent: **03.09.2025**
(21) Application number: 22732014.0
(22) Date of filing: 20.05.2022
(51) Int. Cl.: H04W 12/02, H04W 4/80

(54) **SIGNAL-EMISSION CONTROL DEVICE FOR AN RF-BASED ACTIVITY-SENSING ARRANGEMENT**
SIGNAL-EMISSIONSSTEUERUNGSVORRICHTUNG FÜR EINE HF-BASIERTE AKTIVITÄTSERFASSUNGSANORDNUNG
DISPOSITIF DE COMMANDE D'ÉMISSION DE SIGNAL POUR UN DISPOSITIF DE DÉTECTION D'ACTIVITÉ À BASE DE RF

(30) Priority: 02.06.2021 US 202163195750 P; 15.06.2021 EP 21179609
(43) Date of publication of application: 10.04.2024
(73) Proprietor: Signify Holding B.V., 5656 AE Eindhoven (NL)
(72) Inventor: KRAJNC, Hugo, José, 5656 AE Eindhoven (NL); DEIXLER, Peter, 5656 AE Eindhoven (NL); SIRAJ, Muhammad, Mohsin, 5656 AE Eindhoven (NL); SADIKIN, Mohammad, Fal, 5656 AE Eindhoven (NL)
(74) Representative: Verweij, Petronella Daniëlle
(86) International application number: PCT/EP2022/063755
(87) International publication number: WO 2022/253597

(56) References cited:
- WO-A1-2020/164758
- US-A- 5 450 492
- US-B1- 6 735 630

## Description

### FIELD OF THE INVENTION

The present invention is directed to a signal-emission control device, to a wireless transmitter device, to a wireless receiver device, to a subject-activity sensing arrangement, to a method for controlling operation of a signal-emission control device, to a method for controlling operation of a subject-activity sensing arrangement and to a computer program.

### BACKGROUND OF THE INVENTION

Radiofrequency (RF) sensing techniques leverage the RF signals reflected from a human body for tracking people and recognizing their activities and gestures even behind the wall. These techniques also introduce serious privacy leakage issues, since a third party system may be able to conduct illegitimate human tracking and activity recognition by analyzing the radiofrequency communication signals bouncing off the human body. This privacy leakage issue can be solved by covering the private region with electromagnetic shielding (similar to the Faraday cage). Also, a jammer that distorts the information embedded in the reflected signal everywhere can be used to avoid the illegitimate use of the RF communication signals. However, this would also incapacitate the legitimate use of the RF signals for presence sensing or activity sensing purposes.

Document "Aegis: an interface-negligible RF sensing shield", by Yao Yao, et. al., presented at the IEEE International Conference on Computer Communication, 15-19 April 2018, Honolulu, HI, USA, discloses an interference-negligible RF sensing shield configured to reflects the received RF signal from a legitimate source by changing its amplitude, Doppler shift, and delay. By rotating a directional antenna while transmitting signal, the interference-negligible RF sensing shield covers potential adversary regions where an eavesdropping device may be located.

WO 2020/164758 A1 discloses a method for time allocation between RF-based presence and/or location detection and message reception comprising using a first protocol to transmit and/or receive a radio frequency signal during a first part of each of a plurality of periods, said radio frequency signal being used for presence and/or location detection; and obtaining network messages transmitted wirelessly using a second protocol during a second part of each of said plurality of periods, said second part not overlapping with said first part, wherein the electronic device comprises a lighting device; and wherein said network messages comprise lighting control messages.

### SUMMARY OF THE INVENTION

The invention is defined by the appended claims. It would be beneficial to reduce the complexity of existing systems for avoiding illegitimate use of RF signals by eavesdropping devices.

According to a first aspect of the present invention, a signal-emission control device is disclosed. The signal-emission control device is suitable for controlling emission of wireless RF communication signals in a wireless communication network that includes at least one wireless transmitter device and at least one wireless receiver device. The emission of the RF communication signals is controllable with respect to one or more variable signal parameters. The signal-emission control device of the first aspect comprises an emission-value ascertainment unit that is configured to ascertain variation-data indicative of an emission-value variation of signal-parameter values of one or more of the signal parameters. The signal-emission control device also comprises a transmitter-control unit that is connected to the emission-value ascertainment unit and configured to control operation of the at least one of the transmitter devices for transmitting the wireless radiofrequency communication signals according to the ascertained emission-value variation of the respective signal-parameter value. Further, the signal-emission control device comprises a receiver-control unit that is connected to the emission-value ascertainment unit and configured to control a provision, to at least one of the wireless receiver devices of the communication network, of control-data indicative of the signal-parameter value of the one or more signal parameters according to which the transmitter device has emitted the wireless radiofrequency communication signal.

For RF communication signals provided using a given constant signal-parameter value of a given signal parameter, variation of the signal-parameter of the signal as received at the receiver devices are correlatable to an activity state such as a presence, absence or a movement (e.g., gestures, vital-signs such as heart beat or breathing motion, etc.) of a subject interacting (e.g. absorbing or reflecting) part of the energy of the RF signal. The signal parameters are therefore parameters of the RF communication signal that are influenceable by a subject activity state such as presence, absence or movement -voluntary such as gestures or involuntary such as heart beat or breathing- of a subject within or through the (multi)path that the RF communication signal travels from the transmitter device to the receiver device. The area where an influence is possible is referred to as sensing-volume (also sometimes referred to as activity-sensing volume or presence-sensing volume). Thus, the signal-emission control device is advantageously configured to control emission of the RF communication signals by the transmitter device according to varying signal-parameter values. The signal parameters are parameters of the emission of a RF communication values where a variation of the values thereof is correlatable to an activity state such as a presence, absence or a movement, voluntary or involuntary- of a person within a given sensing volume where transmission of the RF communication signal can be influenced by the activity state (e.g., presence or movement) of a subject. The variation of the signal parameter value according to an emission-value variation obtained from the ascertained variation-data has the effect that different wireless radiofrequency communication signals are emitted in accordance with respective different signal-parameter values of the one or more signal parameters. Thus, variations of the signal-parameter values of the signal as received by a receiver device, irrespective of whether it belongs to the wireless communication network or does not belong to the wireless communication network, i.e. an eavesdropping device intending to perform RF-sensing using the RF communication signals within the wireless communication network, cannot be univocally correlated to the activity state (e.g., presence) of a subject within a given sensing volume.

In order to enable use of the RF communication signals for legitimate RF-sensing in the wireless communication network, the signal-emission control device is advantageously configured to control the provision, to at least one of the wireless receiver devices of the communication network, of control-data indicative of the signal-parameter value of the one or more signal parameters according to which the transmitter device has emitted the wireless radiofrequency communication signal. The control-data is therefore indicative of the actual signal-parameter value or values that have been used by the at least one transmitter device to transmit the RF-communication signal, which is the information required to perform a reliable presence-sensing or activity-sensing function using the RF-communication signals.

The signal-emission control is thus suitable for ensuring upfront share of the modulation pattern of the signal-parameter used to provide the RF-communication signals, enabling other trusted devices to demodulate the signal parameter. The proposed modulation of the signal-parameter used to transmit RF-sensing signals (i.e. RF-communication signals used for an RF-based sensing function for sensing subject-activity) addresses the concern of the devices within a trusted wireless communication network being abused by rogue or eavesdropping devices for unintended or illegitimate sensing purposes. The signal-emission control device according to the first aspect of the invention is therefore suitably configured to control a modulation of the RF-communication signals with respect to at least a signal parameter in order to prevent an illegitimate use of these signals for subject sensing, e.g. presence sensing or subject-activity sensing, and at the same time provides the information necessary to perform a suitable demodulation to at least one receiver device of the wireless communication network. The complexity of existing systems for avoiding illegitimate use of RF signals by eavesdropping devices is thereby significantly reduced.

In the following, embodiments of the signal-emission control device will be described.

In an embodiment, the emission-value ascertainment unit is configured to receive, from an external device, the variation-data indicative of an emission-value variation of signal-parameter values of one or more of the signal parameters. In another embodiment, the signal-emission control device comprises a storage unit that is configured to store one or more predetermined sets of variation data and the emission-value ascertainment unit is configured to access the storage unit for retrieving a corresponding one of the variation data. In another embodiment, the variation data is additionally or alternatively generated randomly or downloadable from a trusted source.

In an embodiment, the control of the provision of the control-data to the receiver device includes, for example, a direct provision of the control data via a direct, i.e. one hop, communication channel, wired or wireless, or a provision via one or more intermediate devices, such as a router, switch or any other suitable communication device. In another embodiment, the receiver-control unit is configured to control the provision of the control data by controlling operation of the transmitter device for transmitting the control-data indicative of the signal-parameter values.

In an embodiment, the ascertainment unit is configured to ascertain the variation-data, e.g. to receive or to access a storage unit comprising the variation-data, which is indicative of the emission-value variation of the signal-parameter value of one or more signal parameters that include at least one of a signal power, a signal center frequency, a signal beam-form of the emitted wireless radiofrequency communication signal, or any combination thereof.

In an embodiment, the signal-emission control device is configured to ascertain variation data indicative of a variation of the signal power used by the transmitter device to provide the RF communication signals. Received signal strength indication (RSSI) is the most likely parameter to be used by a rogue device to perform RF Sensing upon the passive reception of an RF communication signal, as it is the most indicative signal parameter for detecting activity state, such as motion or presence of a subject within a sensing volume. More importantly, as RSSI (which is directly derived transmit power) is a parameter that can be extracted even if the eavesdropping device is not part of the wireless network, the proposed time-series modification scheme of the signal power will that is included in the ascertained variation data renders a sensing attack even from outside of the network impossible.

Signal power modulation should, in most cases, have a preference towards lowering the transmit power to different ranges rather than increasing it. The inventors recognize that increasing the transmit power level might make the proposed masking of events less realistic to the attacker (as it is well known that due to motion the signals rarely get amplified, but rather almost always get attenuated). In addition, increasing the transmit power might face limitations due to local wireless spectrum regulations, or the nodes might simply already be transmitting by definition at their highest physically possible power.

In an embodiment, the proposed signal power modulation additionally takes into account whether there are critical links in the network that could be affected by a drop in RF performance due to the usage of lower transmit powers. For example, nodes belonging to a mesh network should not lower the transmit power too much if they participate in a critical routing link between two segments of the overall network; however, if the same wireless node is rather used in a star topology, it can reduce the transmit power without affecting the other devices in the network. Thus, in an embodiment, the variation data ascertained for controlling provision of RF communication signals by two or more different transmitter devices depends on the respective. Additionally, in another embodiment, the variation data also depends on the wireless communication link, i.e. on both the transmitter device and the receiver device.

Other considerations for the variation data of signal power that are to be taken into account before deciding whether or how much to lower the signal power when transmitting the RF communication signals include:
- Whether the proposed modulation/variation of the signal power can lead to triggering of frequent routing scheme changes (i.e. would other nodes of the wireless communication network repetitively select and deselect this node as a message forwarding node, or would the network topology remain largely unchanged even with modulated signal power). The applied modulation scheme of the signal parameter may be designed to monitor whether a node is more likely to be de-selected as a routing node when performing the modulation; when needed. In this case, the variation data can be updated accordingly such that the transmitter-control node is configured to control operation of that transmitter device by adjusting the signal-parameter value of the signal power such that it no longer gets de-selected.
- Whether the variation of the signal power can lead to triggering warnings of a higher hierarchical system in terms of network performance. Getting frequent warnings of poor/loss-of connection between devices might annoy the user.
- Whether the variation of the signal power can lead to a significant or noticeable loss of data. E.g., would streaming a video via WiFi seem spotty or slow responsive due to applying the proposed modulation.

In an embodiment, for instance, the variation data is indicative of a predetermined decrease or increase of the nominal signal power used to transmit certain predetermined RF communication signals. For instance, and as a non-limiting example, the variation data can be indicative of a reduction of 3dB with respect to the nominal signal power of every fifth transmitted signal. In general, the variation data preferably assigns a signal power shift with respect to the nominal signal power, including 0 dB for a non-modulated transmission, to each of the RF communication signals.

In another embodiment, the variation data is additionally or alternatively indicative of an emission-value variation of a channel frequency. In general, the variation data preferably assigns a channel-frequency shift with respect to the nominal channel-frequency, to each of the RF communication signals. In many cases small variations to the transmission frequency can lead to noticeable variations in the multipath behavior of the RF communication signals, hence affecting the RSSI and Channel State Indication (CSI) based presence or, in general, activity sensing function. In this embodiment, the transmitter control unit is configured to control operation of the transmitter device to, alternatively or additionally to modulating the signal power, also modulate a center channel frequency at which the transmission of the RF communication signals take place.

In a particular embodiment, that uses WiFi protocols for signal transmission, for example, CSI is used to extract the amplitude and phase shift of each of the different subcarrier frequencies within the channel. In the case of a 20 MHz channel at 2.4 GHz, there are 64 equally spaced subcarriers of 312.5 kHz bandwidth each. Shifting the center of a first channel by e.g. 100 kHz means that all these channels would be off-centered, and therefore reception by an unsuspecting eavesdropping receiver would look like a significant drop/increase in the amplitude and phase shift, potentially indicative of human presence. In an embodiment, the variation data is indicative of an emission-value variation of the channel frequency which results in the emission of subsequent wireless communication signals, each modulated with a different channel center frequency, resulting in a so-called chirp, either an up-chirp or a down-chirp, where the frequencies of the frequency sweep are not continuous but stepped, i.e., each wireless communication signal is provided at a given channel frequency value.

In yet another embodiment, the variation data is additionally or alternatively indicative of an emission-value variation of a signal-beam form of the RF communication signal emitted by the transmitter device. For instance, wireless communication devices using MIMO (multiple input-multiple output) with multiple antenna pairs can already perform beam forming, hence effectively focusing their transmit signal power along a certain solid angle. The beamforming is usually applied by communication devices, typically using WiFi communication protocols, to ensure higher efficiency in the communication by directing the signal power of the transmitter device predominantly in the angle where the reception by the receiver device is highest (and consequently avoiding wasted power in directions where reception will be poor, as well as minimizing interference with other wireless links present in the space). In an embodiment, the variation data is thus alternatively or additionally indicative of different beam-forming parameters to be applied to different RF communication signals. Thus, the transmitter device is instructed by the signal-emission control device, to dynamically beam form the transmitted signal into slightly varying solid angles. To a not-trusted device attempting to perform RF sensing the variations in beam forming would look like dynamic variations of amplitude, phase, and even angle of arrival, all of which are variations commonly associated to distortions caused by human activity within the sensing volume.

An embodiment of the signal-emission control device is advantageously configured to control operation of the transmitter device by alternating different modulation types on the fly depending on success criteria or impact criteria. For example, the transmitter device may instructed by the signal-emission control device to predominantly apply amplitude modulation (i.e., variation of the signal power of the emitted RF communication signal) but for every fifth message use a beam forming modulation. This means that the overall traceability/predictability of the patterns is reduced, hence making RF sensing difficult for any potential sniffing or eavesdropping device.

In another embodiment of the signal-emission control device of the first aspect of the invention the emission-value ascertainment unit comprises a context-data ascertainment unit that is configured to ascertain network-context data pertaining to the devices in the wireless communication network or to the wireless radiofrequency communication signals provided or received by the devices in the wireless communication network, and wherein the emission-value ascertainment unit is configured to determine the variation-data using predetermined associations between the network-context data and the signal-parameter values.

In this embodiment the emission-value ascertainment unit is advantageously configured to determine, based on real-time conditions of the devices in the network and/or of the communication network itself, the variation data for modulating the given signal-parameter; hence the variation can be determined right before the RF communication signal is transmitted and then used modulate the one or more signal-parameters. For example, in an embodiment, the context-data ascertainment unit is configured to determine, as context-data, wireless-traffic load data indicative of a current load in the wireless communication network, and to control the operation of the transmitter device according to a modulated value of the signal parameter, i.e. a value different from the nominal value, in dependence on the ascertained current amount of wireless traffic noticed in the network, without involving central or upfront scheduling.

In an embodiment of the signal-emission control device of the first aspect of the present invention, the context-data ascertainment unit is further configured to determine, using the network-context data, device-position information indicative of a installation-location of the devices belonging to the communication network or of a distance amount between the devices, and to determine the variation-data using predetermined associations between the installation-location or the distance amount and the signal-parameter values. Installation-location refers to a place or location where the device is installed (room, position within said room, etc.), or, in general, to a place where the device is currently operating, for instance in the case of a mobile device. In the case of an eavesdropping device, it may not be physically installed and an eavesdropper may hold it in her or his hand. In addition, the most likely positions of a malicious eavesdropping device (e.g. on a sidewalk adjacent to a house) can be inferred and based thereupon decide how to effectively modulate the signal parameter of the wireless radiofrequency communication signal.

In another embodiment, the network-context data is indicative of a type of device of the devices of the communication network. For instance, the context data is indicative of whether the respective device has limited power allowance (e.g. battery-operated device) to perform adaptive signal strength modulation (e.g. to save the energy and to perform modulation masking in effective manner). Additionally, the signal-emission control device is configured to ascertain information about the RSSI at the receiver device side. For example, all devices in vicinity periodically advertise information about their RSSI observation and its sensitivity level. In a case where the devices are static devices (e.g. sensor devices attached to the wall), the method of getting RSSI level can be done once only during the commissioning phase. By using this ascertained network-context data, the signal-emission control device is advantageously configured to determine an effective power signal for transmissions to a given receiver device such that the receiver device can still demodulate the signal since it is at least equals to its sensitivity level.

By doing so, the signal-emission control device can estimate the transmission power threshold, i.e. the minimum signal power, by calculating the difference between RSSI and the currently experienced receiver sensitivity level of the receiver device. Therefore, the signal-emission control device can determine the threshold (e.g. RSSI ≥ sensitivity level required for successful RF sensing by the receiver device) in order to save the energy and consequently perform energy-effective channel masking.

In another embodiment, the different possible signal modulation types, i.e. which signal-parameter is varied and which values thereof are used in the variation, are determined based on an archetype of the transmitter and/or receiver device (type of the device) as well as the most likely usage type of these devices and likely activity types (depending on a given installation location) that occur within the sensing volume defined by the devices. This is meant to ensure that the applied masking strategy in the respective sensing volume is also representative of the typical human activity expected in this space type (e.g. bedroom vs living room); this ensures that the masking looks realistic, i.e. that an eavesdropping device experiences changes in the RSSI caused by the variation of the values of the signal parameter during provision of the RF communication signal that are correlated to an expected occupancy or use of the respective sensing volume. In addition, by ensuring that the modulation scheme is looking realistic, this will further complicate it for the rogue eavesdropping device to try to break/reverse engineer the administered modulation scheme (as the eavesdropping device would have hardly any indications to suspect there is something strange going on with the RF sensing metrics.)

Device type or installation location information can be used, for example, to identify a built-in ceiling spot or downlighter as a wirelessly controllable lighting device acting as a transmitter device. This type of devices will have an already quite directional RF radiation pattern; this is not necessarily due to the luminaire design but may be due to the downlight being placed inside a concrete ceiling or being inside a metallic luminaire designed for optimal heat dissipation. If the wireless radiation pattern, or beam form, is quite directional, then the distortions caused by human activity will have an unusually large variation compared to another wireless transmitter device with a regular homogeneous wireless radiation pattern; this is the case as for built-in ceiling spot or downlighter the chances of humans significantly disturbing the wireless path is higher due to its directional transmission.

Thus, using this information, the signal-emission control device can be advantageously configured to introduced variations on the signal parameter that mimic typical "motion fingerprints" experienced if a person is really present close to these transmitter devices. In the exemplary case of the ceiling mounted spots, the signal-emission control device is advantageously configured to induce a higher amplitude modulation swing, e.g. a larger decrease of the signal power used for providing the RF communication signal, associated with the fake human motion than if the transmitter device was, for instance, a ceiling pendant with a broader or even omnidirectional radiation pattern.

Variations of the signal power resulting in lower signal power and thus lower amplitude of the RF communication signals is something that would normally not be desired in an RF sensing system as it means that the overall signal-to-noise ratio is lower, adversely affecting the RF sensing algorithm. However, in this situation, the selective degradation of signal power is only done to such extent that communication is still feasible but rendered less useful if no demodulation information in the form of control-data is available to the receiver device running the occupancy-sensing algorithm.

Further, the device-position information is in an embodiment, indicative of a room in which the device is installed. For example, in the case of a wirelessly controllable lighting arrangements, multiple lighting devices, i.e. devices of the communication network, can be associated to a given room or space, typically via a tag associated to each device during commissioning or installation. In this embodiment, the signal-emission control device may control the transmitter devices that are installed in a given room to selectively modulate the signal parameters in an orchestrated fashion; the aim of the orchestration is to further degrade the third party eavesdropping performance by the several transmitter devices showing similar type of variations within a given time frame. For example, if transceiver devices (A, B and C) are placed in a room and all have relatively broad beam angles for transmitting the wireless communication signals, there are three links between network devices that could be used for sensing (A-B, B-C, A-C). If there would be real motion in the room, most likely all the links would be affected or show signs of signal-parameter variations within a short time window.

If the signal-emission control device would apply different signal parameter modulations to each of the three transmitter devices, then the overall link performance would not necessarily be realistic matching with any known activity type, or simply counteract each other to an extent that the rogue or eavesdropping device does not bite the bait of the simple fake occupancy modulation. Therefore, in a preferred embodiment, the signal-emission control device is configured to control the modulation or variation of the values of the signal-parameters such that similar types of variations are used for the transmitter devices in a given room, preferably within a predetermined modulation-time window; in this way the overall area degradation is more noticeable and consistent with variations introduced by real human activity.

The device-position information is, in another embodiment, alternatively or additionally indicative of a spatial location of the devices with respect to each other, e.g. of a distance amount between a pair of devices. The spatial arrangement may be determined via BLE or UWB beacons or by the 60GHz radio. This is especially useful if there is a suspicion that a rogue device may be present within the network. As first step, the context data ascertainment unit is configured to determine which transmitter devices are physically closer and which farther apart from the suspected third party rogue or eavesdropping device. For that transmitter device, which is most closely spaced to the suspected rogue device, the signal-emission control device may apply a stronger "fake" modulation, i.e. a larger variation of the value of the signal parameter, as a real people walking between that transmitter device and the suspected rogue node would cause a higher impact/distortion on the wireless RF communication signal. For a second device, which is located further away, the signal-emission control device may apply a less pronounced "fake" modulation.

In another embodiment, wherein the context-data ascertainment unit is configured to ascertain signal-data indicative of reception-signal-parameter values of the one or more signal parameters of the wireless radiofrequency communication signals received by the at least one wireless receiver device during a predetermined monitoring time-span, and wherein the emission-value ascertainment unit is configured to determine the variation data in accordance with the ascertained reception-signal-parameter values.

The context-data ascertainment unit is in an embodiment configured to monitor and record motion fingerprints experienced on the RF communication signals when a real person is present in the sensing volume and then use the monitored data for defining a variation of the values of the signal parameter for a modulation scheme representatively faking typical activities of subjects within the sensing volume. This recording can be made on the actual space over a period of time prior to the activation of this functionality, or can be calculated based on what other similar systems have seen (in terms of location, type and quantity of nodes, most common activity, etc.).

In another embodiment, the signal-emission control device alternatively or additionally comprises a scheduling unit configured to ascertain operation-trigger data indicative of predetermined operation conditions that have to be fulfilled for triggering or activating control of emission of the wireless radiofrequency communication signals in accordance with the ascertained emission-value variation of the respective signal-parameter value. In this particular embodiment, the transmitter control unit is further connected to the scheduling unit and configured to determine whether the predetermined operation-conditions are fulfilled and to control the operation of the respective wireless transmitter device according to the variation-data further upon fulfilment of operation conditions. The operation-trigger data can be, for instance, received from an external source, determined or generated by the signal-emission control device, in particular by the scheduling unit, stored in a memory or storage unit and accessed by the scheduling unit, or otherwise ascertained by the scheduling unit.

The operation-trigger data is in an embodiment indicative of a time-window in which the operation in accordance with the ascertained variation data is to be performed, i.e. where a modulation of the value of the one or more signal parameters of the RF communication signals is active. The time-window can be in an embodiment, a time-window indicative of a starting time and a finishing time of operation. In another embodiment, the time-window is indicative of a set of signals from a sequence of signals for which the modulation is to be applied. For instance, the modulation is repeatedly applied to a predetermined subset of m signals from a repeating ordered sequence of n communication signals, where m is smaller than n. As an example, the modulation pattern is repeated every 10 signals and a predetermined modulation is applied to the first, third, fifth, seventh and ninth communication signals of the ordered sequence of ten communication signals. Any other length n of the ordered sequence and any other subset m of communication signals to be modulated can be chosen.

For example, an embodiment of the signal-emission control device is configured to determine, based on operation-trigger data, that modulating of RF communication signals should automatically start every night, between 23:00 and 07:00. In another embodiment, further conditions may have to be additionally fulfilled. For instance, in an exemplary embodiment, the modulation of RF communication signals starts every night between 23:00 and 7:00, as soon as there is a first indication of motion in the bedroom. The modulation scheme will then prevent 3rd party systems which passively sniff wireless transmissions to make use of the data to determine breathing patterns of people sleeping in the bedroom; this is important as breathing/sleep tracking has large privacy considerations; for instance, long-term drifts in breathing patterns are proven to be linked to the emergence of certain illnesses and hence reveal highly private data. As breathing detection may technically only be possible when the person is lying still (i.e. no other major motion), at other times of the day when the person is awake, it is not required to modulate the RF communication signals as the breathing is hardly noticeable at all. The actual times given in these particular examples should not be considered as limiting. Different operation time windows may be indicated in the form of operation-trigger data for different days, and more than one operation time window may be indicated per day.

In another embodiment, the operation-trigger data can additionally define the modulation or variation "depth" of the signal-parameter value over time; i.e. should the modulation always be equal or should there be periods where the modulation depth increases or decreases (e.g. at night, only small modulations are used as a person is supposed to sleep and hence the RF signals are only modulated by the tiny chest movements).

The operation-trigger data is in an embodiment related to how often a RF communication signal should be modulated, that means how often should the RF communication signals be provided according to a different signal-parameter value than the nominal baseline value. For instance, the operation-trigger data can be related to an application of the given modulation to all relevant RF communication signals or only modulate predetermined RF communication signals, for example every fifth RF communication signal), or whether the RF communication signals are to be modulated in bursts (e.g. modulate a burst of 60 messages within 2 seconds) or whether to continuously modulate or stop the modulation at dedicated times, etc.

In case of operation-trigger data indicative of randomly generated schedules, specific device information can be used as seed for generating the quasi-random modulation (e.g. MAC address, manufacturing batch, noise levels picked up by ADC, temperature information, etc.)

A user/system can be concerned about an external sniffer or an eavesdropping device that could be a device not even visible/present in the house (e.g. a WiFi device from a neighboring building) or a rogue WiFi device only passively eavesdropping on all communication signals in the space without initiating any wireless messages; in the latter case, the only requirement is that the rogue device (e.g. kitchen appliance) is within the range of the wireless communication signals coming from the adjacent room.

To protect against this specific attack, one option is that the modulation of the transmitted wireless RF communication signals is activated continuously. This means that any RF communication signal being sent by the trusted devices is be deliberately modulated in terms of one or more signal parameters, regardless of whether there is currently a critical or privacy sensitive activity taking place that should be masked.

In an embodiment, the signal-emission control device enters the continuous modulation mode based on, for example, a user preference input (e.g. the user has set the system into "high privacy mode") or on the sensitivity of the area itself (e.g. office where highly confidential tasks are performed; academic papers have demonstrated WiFi sensing capable of detecting user keying in a code on a touch screen display).

In these circumstances, the signal-emission control device concludes to modulate the value of the RF communication signal continuously (although some of the chosen values may correspond to the nominal value of the signal-parameter) and not risk critical context being harvested by rogue devices. The signal-emission control device accepts the higher overall power consumption caused by the RF parameter modulation.

In another embodiment, the signal-emission control device is configured to modulate the signal parameter value of the RF communication signals at specific moments in time or time windows e.g. to prevent that a potential sniffer device can determine whether a specific type of activity taking place (e.g. person sleeping), or particulars about that activity (e.g. heartrate).

Alternatively, the signal-emission control device may only aim to prevent third party devices from doing accurate RF Sensing, rather than preventing all RF sensing in the room. For example, once motion is detected in a room, the disturbances of the signals by the human might be so large that they cannot be masked in entity by the proposed modulation of the value of the signal parameters; nevertheless, the applied modulation can still ensure that the third party device find it impossible to discern with confidence whether the motion is coming from a single person or multiple ones (or to distinguish whether the motion comes from the master bedroom or the adjacent guest bedroom). In other words, even if the modulation is only partially successful in masking, this will still suppress highly contextual information leakage like people counting or people location.

Alternatively, the variation of the value of the one or more signal parameter can also be applied by the signal-emission control device based on operation-trigger data indicative of known absence information of the user (towards the trusted system). For example, an out-of-home mode (based on the GPS location of the phone). This data is used to trigger the modulation of the values of the signal parameter. This will give the impression to a rogue-sniffing device that there is continuous motion in the house (at least during normal periods like 7am to 10pm). In other words, this embodiment describes an advantageous way of presence or, in general subject activity mimicking for RF sensing to fool would-be burglars.

The modulation is stopped whenever the signal-emission control device gathers confidence that the key activity needed to be masked has ended and therefore a possible third party that would be traffic sniffing no longer constitutes a substantial privacy risk. For example, the user has moved from the bedroom to the hallway (therefore indicating she or he is no longer sleeping), the user's geofencing information indicating she or he is returning home, etc.

In all of the above embodiments, the signal-emission control device can for example be additionally configured to inform the user, via a user-output unit, about the potential drawback of applying such modulation to the overall system performance. For example, the modulation could affect latency of the wireless communication network, as all devices need to spend a slight amount of time in both modulating and demodulating the RF communication signals. However, for certain type of activities (user sleeping, not at home, etc.) latency is something that will be hardly noticed, while it is important for others (e.g. garden lighting in driveway automatically switching on).

In yet another embodiment, the signal-emission control device is configured to allow the transmitter devices to autonomously choose when to start modulating the RF communication signals e.g. if they consider that they are under attack or suspect that a rogue device is (wirelessly) present in the house. Possible security threats are particularly determined by monitoring unusual behaviors of all device in vicinity, e.g.:
- Devices with incorrect/non-conforming identification data (e.g. repeated MAC addresses).
- Devices present at an unusual location (e.g. a WiFi device is localized in a hidden corner not visible from the street and from within the house, for instance, in the dumpster area; this may indicate that an eavesdropper is standing there to spy with RF sensing on the inhabitants in the house).
- Appearance of the device is associated a suspicious human motion trail; for instance, every evening a person walks to the dumpster area and stays there a pronged time before leaving again. The motion trail may be determined by RF-based sensing using outdoor devices such as garden lights or devices located close to windows or outer walls of the house, or by other means e.g. suspicious person passing a ring doorbell camera when coming and leaving.
- Comparing info of devices advertising as WiFi access points with known/trusted list of router manufacturers.
- Devices who fail to authenticate as expected.
- Significantly increasing or decreasing network traffic.
- Unusual percentage of device utilization (e.g. either significantly higher or lower than the typical utilization threshold of a WiFi device).
- Unusual packet, message, or command that are not normally present on the network.
- Unusual sequence of actions performed by a device (e.g. origin of specific command, unusual network scan, etc.).
- Inconsistent frequency/moments of identification (i.e. if a device is powered up it will normally "announce" itself to the network); if this happens at potentially suspicious times, or at strange frequencies that do not match the possible usage that a person would give that device, this could be an indication that it is a suspicious device.
- Or in general, the modulation scheme is started automatically by the lighting nodes upon the intrusion-detection-system detecting any type of suspicious, possibly malicious activity.

Additionally, also comparing metadata of the devices belonging to the wireless communication network could be relevant. For example, a device identifying itself as a tablet, laptop or smartphone is likely to go in and out of range, but a device that identifies itself as a desktop, smart TV, or a general development board is unlikely to be changing locations if being used properly by a user, but could be a symptom of a nasty user trying to get an eaves dropping device close by "making it" look like it is a normal device.

This is particularly advantageous in embodiments where the signal-emission control device is comprised, for instance as an integral unit, by the transmitter device.

After the transmitter devices have first proactively and immediately entered into the modulating mode for the sake of blocking potential undesired sniffing, the signal-emission control device may be configured to ask the user for feedback; for instance, the user may confirm to have recently added a new WiFi device to the network; the UI may allow the user to optionally inform the lights that the new device is authorized to sniff data (despite of the lights having considered the maker of the new device as a not trusted device). The user may also specific at which times of the day the device is authorized to sniff data (e.g. only during the day or when the app associated with the device is open on the smartphone).

In another embodiment, the context data is indicative of an intention or goal of the ongoing wireless RF communication signals. Based on this information, an embodiment of the signal-emission control device determines which RF communication signals which are deemed performance- or mission critical (e.g. for a wirelessly controllable lighting arrangement, lighting controls messages for actuating the light) are not to be modulated as the modulation might affect in some cases the reception capability at the intended destination such as the to-be-actuated light. Similarly and as an example, a thermostat reporting temperature just once a minute, a plug reporting an increase in power consumption, etc. should not modulate their mission critical messages as some non-lighting systems might depend on the data. In addition, many types of controls/reporting messages are not sent very frequently (typically once every couple of seconds), meaning that the low messaging rate anyway would not allow the rogue devices to perform any relevant RF based sensing.

On the contrary, RF communication signals which are either not performance or mission critical, or do not relate to regular network maintenance activities, are candidates for being modulated without degrading the core functionality of the wireless communication network. For instance, ping message do not have any specific functionality beyond just checking the presence of the other device (i.e. the ping message is not performance or mission critical). The signal-emission control device can be advantageously configured to control provision of reply signals to the ping messages with modulated RF communication signals, or select whether to modulate depending on the frequency of the messages (i.e. the light may only modulate ping messages if there are more than 5 ping messages per second, as otherwise it might be normal WiFi network maintenance traffic).

In another embodiment, which may include any of the technical features discussed with respect to the previous embodiments, the signal-emission control device further comprises an encryption unit connected to the receiver-control unit and configured to encrypt the control data before being provided to the respective receiver device. By using a predetermined encrypting technique known to both the signal-emission control device and to the receiver device, the control-data provided to the receiver device and needed to demodulate signal-parameter of the RF communication signal can be securely transferred to the receiver device.

For example, in those embodiments where a predefined masking schedule is applied, it is advantageous that the signal-emission control device shares the modulation scheme upfront with trusted receivers (but not with the untrusted devices) by controlling provision of the control-data. The receiver devices may receive the schedule and other information useful for successful/less resourced intensive demodulation of the value of the signal-parameter. To share the control-data among the receiver devices in a trusted way, an embodiment of the signal-emission control device comprises an encryption unit configured to apply one or more authentication mechanisms, which are in general listed as follow: network level authentications using cryptographic materials, and/or Physical layer authentications such as device's radio-fingerprinting, and Physical-Unclonable-Function.

Signal-emission control devices comprising a context-data ascertainment unit and/or a scheduling unit and advantageously configured to enable an increase of the verisimilitude of RF communication signal variations for fooling illegitimate eavesdropping devices, for instance eavesdropping devices that analyze variation of signal quality parameters to perform passive RF-based sensing.

According to a second aspect of the present invention, a wireless transmitter device is disclosed. The wireless transmitter device is suitably for controllably emitting wireless radiofrequency communication signals in accordance with a respective signal-parameter value of one or more signal parameters. The transmitter device comprises a signal-emission control device according to the first aspect of the invention and a radiofrequency communication signal emission unit connected to the signal-emission control device and configured to provide the wireless radiofrequency communication signals in accordance with the emission-value variation ascertained by the signal-emission control device. The radiofrequency communication signal emission unit is configured to transmit wireless radiofrequency communication signals according to signal-parameters that can be varied by the transmitter device, such as for example, signal-power, center channel frequency or beam-form of the RF communication signal. The transmitter-control unit is therefore advantageously connected to the radiofrequency communication signal emission unit and adapted to control its operation for providing the RF communication signal in accordance with different parameter values of the one or more signal parameters.

The transmitter device of the second aspect of the invention thus shares the advantages of the signal-emission control device of the first aspect. The transmitter device thus comprises an inventive signal-emission control device for controlling emission of wireless radiofrequency communication signals by the transmitter device. The signal-emission control device comprised by the transmitter device, is configured to provide to the receiver device, and via the receiver control unit that is part of the transmitter device, control-data indicative of the signal-parameter value of the one or more signal parameters according to which the transmitter device has emitted the wireless radiofrequency communication signal.

In an embodiment of the transmitter device of the second aspect, the signal-emission control device comprised by the transmitter device, in particular its receiver control unit, is configured to provide the control-data in the respective wireless radiofrequency communication signal that has been transmitted using the respective signal-parameter value. This is particularly advantageous in cases where upfront sharing the control data indicative of an association between a respective RF communication signal and the values of signal-parameters that have been used for the transmission of the RF communication signal between the devices of the wireless communication network is too complex. Such sharing may lead to excessive memory needs, for instance if a first receiver device is to perform RF sensing with a relatively large number (e.g. >10) of other transmitter devices in a common space, such as a house (i.e. the first receiver device serves ten different wireless communication link that can be used for RF sensing in a respective sensing volume); hence, the first receiver device may have insufficient memory to store the modulation scheme for all 12 transmitter devices. Thus, it is advantageous to append to each wireless RF communication signal an extension of the payload detailing the currently used modulation scheme and/or the used value of the one or more signal-parameter. Additionally, or alternatively, the extension of the payload may be applied only to notify the receivers if the used modulation scheme has changed. This payload extension is preferably performed by the receiver-control unit.

This payload extension can describe whether modulation has occurred at all, details the current modulation type applied, its depth/values, or any other relevant info that might help the receiver device node in accurately/efficiently demodulating that specific RF communication signal. In this embodiment, the effective memory retention in the receiver device is very low (however at the expense of slightly longer wireless messages.)

If the eavesdropping device is already a semi-trusted device (i.e. WiFi device made by another manufacturer but part of the same WiFi network), it will be capable of reading payloads of wireless messages. In this case, a particular embodiment is advantageously configured to encrypt in the payload the control-data that is necessary for the demodulation of the value of the signal-parameters, utilizing, for instance, manufacturer specific keys; this ensures that the proposed modulation-description payload extension cannot be decrypted by 3rd parties even if they belong to the same WiFi network.

According to a third aspect of the present invention, a wireless receiver device is disclosed. The receiver device comprises a radiofrequency communication signal-receiving unit, configured to receive wireless radiofrequency communication signals from a transmitter device. It also comprises a control-data input unit, configured to receive, from a signal-emission control device in accordance with the first aspect of the invention, wherein the control-data is indicative of the signal-parameter value of the one or more signal parameter according to which the transmitter device has emitted the wireless radiofrequency communication signal. The receiver device also comprises a subject-activity determination unit connected to the radiofrequency communication signal receiving unit and to the control-data input unit and configured to determine a reception-signal value of the one or more of the signal parameters (e.g., the signal power of the received signal, the center channel frequency of the received signal, a signal beam form of the received signal), and to determine an activity (e.g., a presence or a movement, or a gesture or a vital sign such as a breathing motion or heart beat) of a subject within an activity-sensing volume based on the determined reception-signal value and on the received control data indicative of the signal-parameter value of the respective wireless communication signal.

Based on the received control-data indicative of the respective values of the one or more signal parameters that have been used for providing the RF communication signals (e.g. signal power, beamforming, center-channel frequency), the subject-activity determination unit is configured to make adjustments of the RF sensing algorithms compensate and/or filter out for the modulation applied to each specific RF communication signal.

In an embodiment, the wireless receiver device is configured to ignore, for the performance of the activity-sensing function, all those RF communication signals having been modulated, i.e. provided with a value of the signal parameter different than the nominal value and only use those that have not been modulated. In an alternative embodiment, the control-data is used by the receiver device running the RF Sensing algorithms, to offset the received RSSI/CSI values by these same amounts to get a clean demodulated signal.

In another embodiment, the wireless receiver device further comprises a decryption unit connected to the control-data input unit and to the subject-activity determination unit and configured to decrypt encrypted control-data, in particular when the control-data has been received in an encrypted form, as discussed above.

A fourth aspect of the present invention is formed by a subject-activity sensing arrangement that is configured to determine a subject activity, such as presence or movement, of a subject within an activity-sensing volume based on variations of values of at least one signal parameter of wireless radiofrequency communication signals provided by at least one transmitter device to an at least one receiver device. The subject-activity sensing arrangement comprises at least one signal-emission control device according to the first aspect of the invention, at least one wireless transmitter device configured to provide wireless radiofrequency communication signals with different values of at least one signal-parameter and at least one wireless receiver device according the third aspect.

The subject-activity sensing arrangement thus shares the advantages of the signal-emission control device of the first aspect and of the receiver device of the third aspect and is advantageously configured to prevent illegitimate use of the communication signals by third parties or eavesdropping devices for performing subject-activity sensing while enabling the performance of the subject activity-sensing to trusted devices.

Preferably, the signal-emission control is integrated in the one or more transmitter devices, such that the transmitter device is in accordance with the second aspect of the invention.

According to a fifth aspect of the invention, a method for controlling operation of a signal-emission control device is presented. The method is suitable for controlling emission of wireless radiofrequency communication signals in a communication network comprising at least one transmitter device and at least one receiver device, the emission being controllable in accordance with a respective signal-parameter value of one or more signal parameters. The method comprises:
- ascertaining variation-data indicative of an emission-value variation of the respective signal-parameter value of one or more of the signal parameters;
- controlling operation of a respective transmitter device for transmitting the wireless radiofrequency communication signals according to the ascertained emission-value variation of the respective signal-parameter value; and
- controlling a provision of control-data indicative of the signal-parameter value of the one or more signal parameter according to which the transmitter device has emitted the wireless radiofrequency communication signal.

The method thus shares the advantages of the signal-emission control device of the first aspect of the invention.

A sixth aspect of the present invention is formed by a method for controlling operation of a subject-activity sensing arrangement that is configured to determine an activity such as a presence or movement (voluntary, such as a gesture, or involuntary, such as a heart-beat or breathing motion), of a subject within an activity-sensing volume based on variations of values of at least one signal parameter of wireless radiofrequency communication signals provided by at least one transmitter device to an at least one receiver device. The method comprises:
- performing the method of the sixth aspect;
- providing the wireless radiofrequency communication signals in accordance with the emission-value variation ascertained;
- receiving the wireless radiofrequency communication signals and the respective control-data;
- determining a subject-activity of a subject within the activity-sensing volume based on the determined reception-signal value and on the received control data indicative of the signal-parameter value of the respective wireless communication signal.

Thus, the method of the sixth aspect shares the advantages of the subject-activity sensing arrangement of the fourth aspect.

Further, a seventh aspect of the present invention is formed by a computer program comprising instructions, which, when the program is executed by a computer, cause the computer to carry out the method of the fifth or of the sixth aspect.

It shall be understood that the signal-emission control device of claim 1, the wireless transmitter device of claim 8, the wireless receiver device of claim 10, the subject-activity sensing arrangement of claim 12, the method for controlling operation of a signal-emission control device of claim 13, the method for controlling operation of a subject-activity sensing arrangement of claim 14 and the computer program of claim 15, have similar and/or identical preferred embodiments, in particular, as defined in the dependent claims.

It shall be understood that a preferred embodiment of the present invention can also be any combination of the dependent claims or above embodiments with the respective independent claim.

These and other aspects of the invention will be apparent from and elucidated with reference to the embodiments described hereinafter.

### BRIEF DESCRIPTION OF THE DRAWINGS

In the following drawings:
Fig. 1 shows a block diagram of RF-based subject-activity sensing arrangement in a room 1 being used by an eavesdropping device to perform illegitimate activity sensing;
Fig. 2 shows a schematic representation of a RF-based subject-activity sensing arrangement according to the invention;
Fig. 3 shows an example of the variation-data of parameter P for a series of nine consecutive RF communication signals;
Fig. 4 shows a block diagram of an embodiment of a wireless transmitter device;
Fig. 5 shows a block diagram of an embodiment of a wireless receiver device;
Fig. 6 shows a flow diagram of an embodiment of a method for controlling operation of a signal-emission control device; and
Fig. 7 shows a flow diagram of an embodiment of a method for controlling operation of a subject-activity sensing arrangement.

### DETAILED DESCRIPTION OF EMBODIMENTS

RF-based sensing allows wireless transceiver devices originally intended for some dedicated functionalities (e.g. lighting, temperature control, audio streaming, etc.) to also become distributed sensors capable of determining simple activities like motion/occupancy but also more advanced activities like breathing patterns, sleep stage, gesture, gait, heartbeat and falls. One of the key concerns with most of the already commercially available RF sensing solutions is privacy. On certain privacy aspects, RF sensing is fundamentally less privacy invasive than cameras as it cannot identify people, extract images of surroundings, etc. However, although RF sensing cannot extract sensitive information in the same way as cameras and microphones, rogue or eavesdropping devices can still make use of wireless signals coming from the installed transceiver devices in the house to run RF sensing without the user's permission or knowledge.

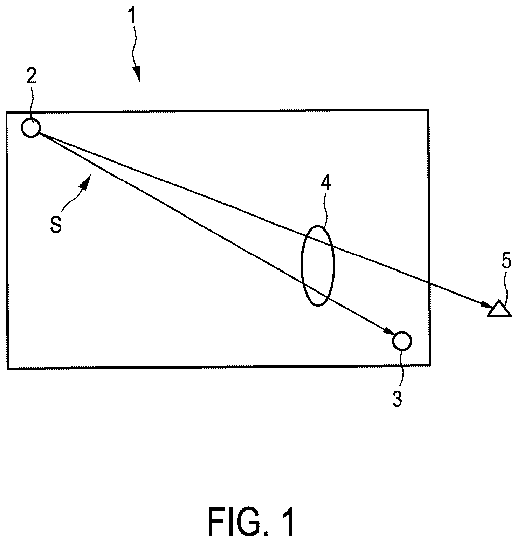

Such a situation is depicted in Fig. 1, which shows a schematic representation of a RF-based subject-activity sensing arrangement in a room 1. The subject-activity sensing arrangement comprises transceiver devices 2 and 3, which can be in the form of wirelessly controllable lighting devices. Wireless radiofrequency communication signals S are used to communicate payload information between the devices. In order to perform a subject-activity sensing function suitable for determining whether there is a person in a given sensing volume performing a given activity, which includes but is not limited to a mere presence, absence, a movement, a gesture, or vital signs such as a heart-beat or a breathing motion, the receiving device determines certain signal-quality parameters from the received RF communication signals, such as received signal strength indication (RSSI) or a channel state indicator (CSI) or any other suitable signal-quality parameter that is correlatable to the activity of a subject in the sensing volume, i.e., that gets affected in a predetermined way by said activity. For instance, the RSSI determined by transceiver device 3, varies in dependence on the presence or not of a subject 4 in the room 1.

While transceiver devices 2 and 3 are doing RF Sensing among themselves, an eavesdropping device 5 placed even outside of the room 1 or house could already receive those RF wireless communication signals (typically sent with 30Hz for occupancy & breathing detection) and extract key metrics by merely passively re-using the transmitted RF communication signals (e.g. by extracting RSSI from each package). RSSI-based sensing can be done without even needing to be part of the communication network. Hence, law enforcement (without a search warrant) or burglars or any other unauthorized person could use RF sensing to determine whether the room 1 is occupied by one or more people 4 without requiring any of their device HW within the attacked room 1.

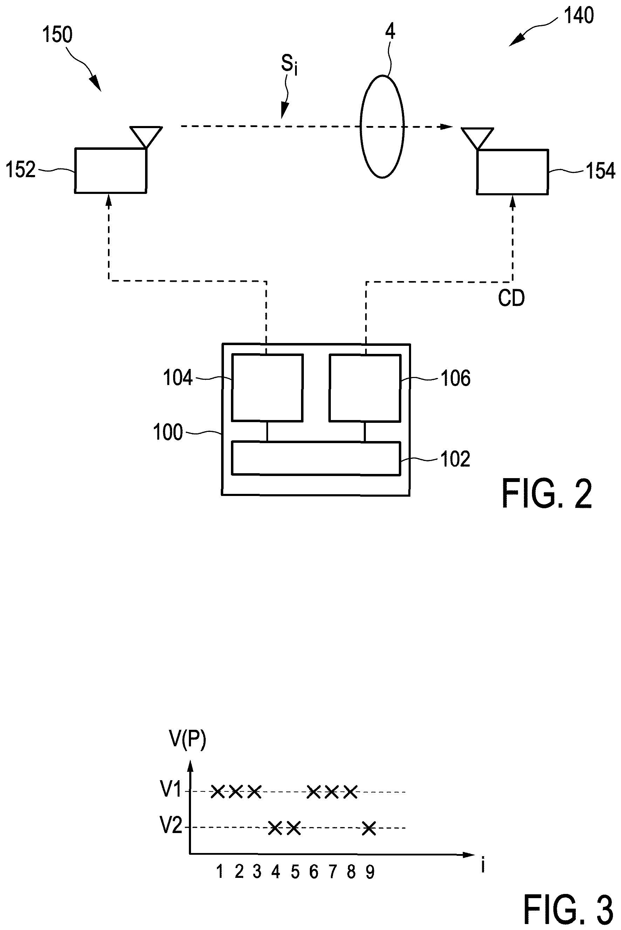

Fig. 2 shows a schematic representation of a RF-based subject-activity sensing arrangement 150 being part of a wireless communication network 140 that comprises a transmitter device 152 configured to provide radiofrequency communication signals Sᵢ in accordance with a respective signal-parameter value of one or more signal parameters, the signal-parameter value being variable. For example, the wireless transmitter device 152 is configured to vary the value of signal parameters such as the signal power or amplitude of the emitted RF communication signal, the center-channel frequency of the channel over which the RF communication is transmitted or a form of the beam of the transmitted RF-communication signal. The RF communication signals Sᵢ are received by a receiver device 154 and are advantageously used to determine the activity of a subject 4 within a respective activity-sensing volume, as explained with reference to Fig. 1 above. In order to prevent an eavesdropper device from using the RF communication signals for performing an illegitimate activity-sensing function such as a presence-sensing function, the RF-based subject-activity sensing arrangement 150 also includes a signal-emission control device 100. The signal-emission control device 100 is configured to control the emission of the wireless radiofrequency communication signals Sᵢ by the transmitter device 152, wherein the emission is controllable with respect to one or more variable signal parameters P. The signal-emission control device 100 comprises an emission-value ascertainment unit 102 that is configured to ascertain variation-data indicative of an emission-value variation of signal-parameter values of one or more of the signal parameters. An example of the variation-data of parameter P is shown in Fig. 3, where the variation data indicates that RF communication signals Sᵢ have to be provided with a value V1 of parameter P when i = 1, 2, 3, 6, 7, and 8, and with a value V2 of parameter P, when i = 4, 5, and 9. The shown pattern may extend or repeat or change for other values of i, and is not to be considered as limiting. Other data variations include more than two predetermined values. Yet other data variations include values that are generated pseudo-randomly. The variation data can, for instance, be provided to the emission-value ascertainment unit 102, can be stored in a storage unit accessed by the emission-value ascertainment unit 102, or can be generated by the emission-value ascertainment unit 102 based on internal or external data.

The signal-emission control device 100 also includes a transmitter-control unit 104 that connected to the emission-value ascertainment unit 102 and configured to control operation of the transmitter device 152 for transmitting the wireless radiofrequency communication signals Sᵢ according to the ascertained emission-value variation (see Fig. 3) of the respective signal-parameter value P. The signal-emission control device also comprises a receiver-control unit 106 that connected to the emission-value ascertainment unit 102 and configured to control a provision, to the wireless receiver devices 154, of control-data CD indicative of the signal-parameter value of the one or more signal parameters according to which the transmitter device 152 has emitted the wireless radiofrequency communication signal Sᵢ. The control-data comprises information that allows the receiver device 154 to correctly interpreting the signal parameter of the received RF communication signal and allowing to distinguish effects caused by, for example, the presence of the subject 4 from those caused by the variation of the value of the signal-parameter as dictated by the variation data. Since the control data is not available to eavesdropping devices, they are not capable of, for instance, correctly assessing the presence or absence of a subject. For instance, in a known RF-sensing arrangement, if there is no person present in the activity-sensing volume, the RF communication signals provided using a constant value of the signal-parameters would be equally received by the eavesdropping device, allowing it to determine that there is no one present in the room. However, in the RF-sensing arrangement of Fig. 2, even if there is no one in the room, the RF communication signals are provided with different values of the signal parameter, and therefore, the eavesdropping device will receive signals having different signal-parameters values at the receiving site, which will be interpreted as an indication of, for example, a presence of a subject in the sensing volume or of a given activity of said subject, such as gestures, or vital signs.

Preferably, the emission-value ascertainment unit 102 is configured to ascertain variation-data indicative of the emission-value variation of the signal-parameter value V1, V2 of one or more signal parameters P that include at least one of a signal power or amplitude of the transmitted signal, a signal center frequency, a signal beam-form of the emitted wireless radiofrequency communication signal S, or any combination thereof.

Table 1 shows exemplary variation-data indicative of variations of the signal power of the RF communication signals Sᵢ, where n is either zero or a positive integer. The RF communication signals are divided into groups of 5, wherein the modulation of the signal power repeats every 5 RF communication signals. The signal power shift is calculated with respect to a predetermined nominal value. Thus, RF communication signals with i=3+5*n are provided unmodulated.

**Table 1. Exemplary variation-data indicative of variations of the signal power.**

| Si # | i=1+5*n | i=2+5*n | i=3+5*n | i=4+5*n | i=5+5*n |
|---|---|---|---|---|---|
| Signal Power Shift | +1dB | -7dB | 0dB | -3dB | -1dB |

The received RF communication signals will therefore have a RSSI that depends not only on the presence or not, or generally, on an activity state, of a subject in the activity-sensing volume, but also on the signal power with which the RF communication signal has been transmitted.

Table 2 shows exemplary variation-data indicative of variations of two different signal-parameters, namely signal power and center channel frequency, of the emitted RF communication signals Sᵢ, where n is either zero or a positive integer. The RF communication signals are divided into groups of 5, wherein the modulation applied repeats every five RF communication signals.

**Table 2. Exemplary variation-data indicative of variations of the signal power and center channel frequency.**

| Si # | 1 | 2 | 3 | 4 | 5 |
|---|---|---|---|---|---|
| Modulation Type | Signal Power | Signal Power | Frequency Shift | Frequency Shift | Signal Power |
| Modulation Level | +1dB | -7dB | -3kHz | +12kHz | -1dB |

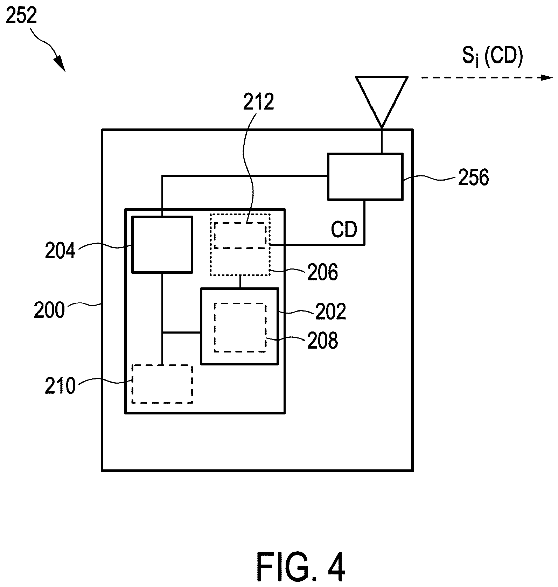

Fig. 4 shows a block diagram of a wireless transmitter device 252 that includes a signal-emission control device 200 as an integrated unit. However, the signal-emission control device 200 can also be implemented as a stand-alone device. The features of the signal-emission control device 200 of Fig. 4 that correspond to those of the signal-emission control device 100 of Fig. 2 are referred to using the same numerals except the first digit, which is "1" for the signal-emission control device 100 and "2" for the signal-emission control device 200.

The transmitter device 252 comprises a radiofrequency communication signal emission unit 256 that is connected to the signal-emission control device 200 and configured to provide the wireless radiofrequency communication signals Sᵢ in accordance with the emission-value variation ascertained by the signal-emission control device 200. Thus, the radiofrequency communication signal emission unit 256 is configured to provide the RF communication signals in accordance with different values of the one or more signal parameters, e.g. signal power or amplitude of the RF communication signal, center channel frequency, or beam form.

In the signal-emission control device 200, the emission-value ascertainment unit 202 may comprise a context-data ascertainment unit 208 that is configured to ascertain network-context data pertaining to the devices 152, 154 or to the wireless radiofrequency communication signals Sᵢ provided or received by the devices in the wireless communication network 140. The emission-value ascertainment unit 202 is advantageously configured to determine the variation-data using predetermined associations between the network-context data and the signal-parameter values V1, V2.

For instance, the emission-value ascertainment unit is advantageously configured to determine, based on real-time conditions of the devices in the network and/or of the communication network itself, the variation data for modulating the given signal-parameter; hence the variation data can be determined right before the RF communication signal Sᵢ is transmitted and then used to modulate the one or more signal-parameters. For example, in an example, the context-data ascertainment unit is configured to determine, as context-data, wireless-traffic load data indicative of a current load in the wireless communication network, and to control the operation of the transmitter device according to a modulated value of the signal parameter, i.e. a value different from the nominal value, in dependence on the ascertained current amount of wireless traffic noticed in the network, without involving central or upfront scheduling.

In an exemplary signal-emission control device 200, the context-data ascertainment 208 unit can be advantageously configured to determine, using the network-context data, device-position information indicative of an installation-location of the devices belonging to the communication network or of a distance amount between the devices, and to determine the variation-data using predetermined associations between the installation-location or the distance amount and the signal-parameter values. Installation location information can be used, for example, to identify a built-in ceiling spot or downlighter as a wirelessly controllable lighting device acting as a transmitter device. These type of devices will have an already quite directional RF radiation pattern; this is not necessarily due to the luminaire design but may be due to the downlight being placed inside a concrete ceiling or being inside a metallic luminaire designed for optimal heat dissipation. If the wireless radiation pattern, or beam form, is quite directional, then the distortions caused by human activity will have an unusually large variation compared to another wireless transmitter device with a regular homogeneous wireless radiation pattern; this is the case as for built-in ceiling spot or downlighter the chances of humans significantly disturbing the wireless path is higher due to its directional transmission.

Additionally, or alternatively, the context-data ascertainment unit 208 can be advantageously configured to ascertain signal-data indicative of reception-signal-parameter values of the one or more signal parameters of the wireless radiofrequency communication signals received by the at least one wireless receiver device during a predetermined monitoring time-span, and wherein the emission-value ascertainment unit is configured to determine the variation data in accordance with the ascertained reception-signal-parameter values. The context-data ascertainment unit is in a particular exemplary emission-signal control device 200 configured to monitor and record motion fingerprints experienced on the RF communication signals when a real person is present in the sensing volume and then use the monitored data for defining a variation of the values of the signal parameter for a modulation scheme representatively faking typical activities of subjects within the sensing volume. This recording can be made on the actual space over a period of time prior to the activation of this functionality, or can be calculated based on what other similar systems have seen (in terms of location, type and quantity of nodes, most common activity, etc.), or can be provided by the receiver devices in the wireless communication network, that receive RF communication signals from the transmitter device.

The exemplary signal-emission control device 200 may also alternatively or additionally comprise a scheduling unit 210 configured to ascertain operation-trigger data indicative of an operation time-window for controlling emission of the wireless radiofrequency communication signals, in accordance with the ascertained emission-value variation of the respective signal-parameter value. In this particular example, the transmitter control unit 204 is further connected to the scheduling unit 210 and configured to control the operation of the respective wireless transmitter device 252 according to the variation-data only during the operation time-window.

Additionally, or alternatively, the signal-emission control device 212 comprises an encryption unit 212 connected to the receiver-control unit 206 and configured to encrypt the control data CD before being provided to the respective receiver device.

In the exemplary transmitter device 252, the receiver control unit 206 control the provision of control-data to the corresponding receiver device by controlling the transmitter device to include the control-data as a payload content in the RF communication signal. The control data can be indicative of the value of the signal parameter used to provide the signal or may include data indicative of values of the signal parameter that will be used for future emissions of signals, such as the variation data presented in Tables 1 or 2 above. Preferably, the control-data is encrypted by encryption unit 212.

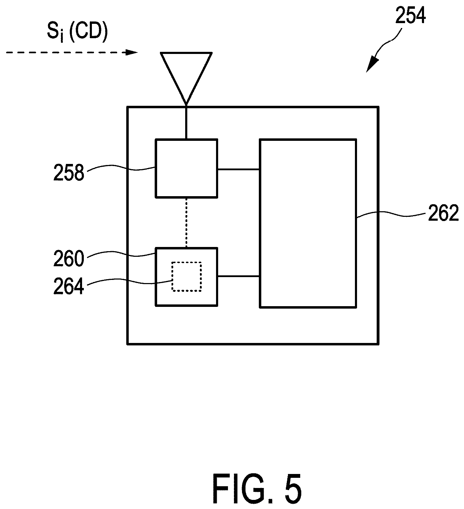

Fig. 5 shows a block diagram of an exemplary wireless receiver device 254 for performing a RF-based subject-activity sensing function. The wireless receiver device 254, comprises a radiofrequency communication signal-receiving unit 258, configured to receive the wireless radiofrequency communication signals from a transmitter device such as device 252 of Fig. 4. The receiver device 254 also comprises a control-data input unit 260, configured to receive, under control of a signal-emission control device such as for example devices 100 or 200, control-data CD indicative of the signal-parameter value of the one or more signal parameter according to which the transmitter device has emitted the wireless radiofrequency communication signal Sᵢ. The receiver device also comprises a subject-activity determination unit 262 connected to the radiofrequency communication signal receiving unit 258 and to the control-data input unit 260. The subject-activity determination unit 262 is configured to determine a reception-signal value of the one or more of the signal parameters, e.g. the RSSI, the center channel frequency or a signal beam-form, and to determine a presence or movement of a subject within a presence-sensing volume based on the determined reception-signal value and on the received control data indicative of the signal-parameter value of the respective wireless communication signal.

Optionally, the receiver device 252 can comprise a decryption unit 264 that is connected to the control-data input 260 unit and to the subject-activity determination unit 262 and configured to decrypt control data encrypted by an encryption unit of the signal-emission control device. In Fig. 5, the control data is provided together with the RF communication signal Si as part of the payload or a payload extension. In other receiver devices, the control data is received via a dedicated communication channel, either wired or wireless.

In case the receiver device receives a request to provide the determined sensing data, e.g. the determined RSSI or the CSI, the receiver device can be advantageously configured to determine whether the requesting device is a fully trusted device and, if not, to share the sensing data, e.g. the RSSI or the CSI obtained using the modulated communication signal, i.e., prior to applying the demodulation or correction using the received control data, Hence, the receiver device prevents the cleaned-up, demodulated or corrected signal parameter for activity determination from being accessible via any external communication port.

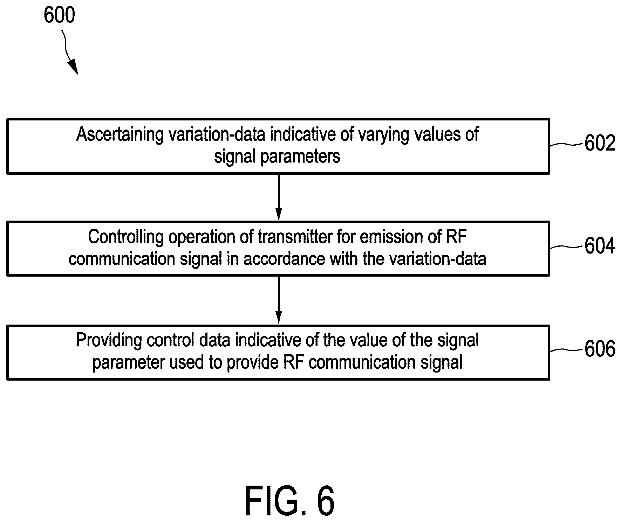

Fig. 6 shows a flow diagram of an embodiment of a method 600 for controlling operation of a signal-emission control device. The method is suitable controlling operation of a signal-emission control device, for controlling emission of wireless radiofrequency communication signals in a communication network comprising at least one transmitter device and at least one receiver device, the emission being controllable in accordance with a respective signal-parameter value of one or more signal parameters. The method comprises, in a step 602, ascertaining variation-data indicative of an emission-value variation of the respective signal-parameter value of one or more of the signal parameters. The method comprises, in a step 604, controlling operation of a respective transmitter device for transmitting the wireless radiofrequency communication signals according to the ascertained emission-value variation of the respective signal-parameter value. The method also comprises, in a step 606, controlling a provision of control-data indicative of the signal-parameter value of the one or more signal parameter according to which the transmitter device has emitted the wireless radiofrequency communication signal.

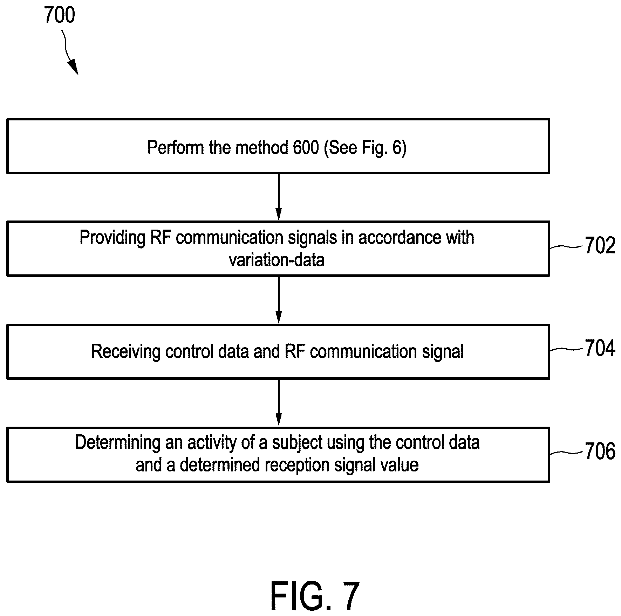

Fig. 7 shows a flow diagram of an embodiment of a method 700 for controlling operation of a subject-activity sensing arrangement that is configured to determine a subject activity, such as a presence or movement or vital sign, of a subject within an activity sensing volume based on variations of values of at least one signal parameter of wireless radiofrequency communication signals provided by at least one transmitter device to an at least one receiver device. The method comprises, performing the method 600 of Fig. 6. The method also comprises, in a step 702, providing the wireless radiofrequency communication signals in accordance with the emission-value variation ascertained. The method also comprises, in a step 704, receiving the wireless radiofrequency communication signals and the respective control-data. The method comprises, in a step 706, determining an activity (e.g., presence, movement, etc.) of a subject within an activity sensing volume based on a determined reception-signal value of the signal parameter and on the received control data indicative of the signal-parameter value of the respective wireless communication signal.

In summary, the invention is directed to a signal-emission control device for controlling emission of RF communication signals in a wireless communication network that includes a transmitter device and a receiver device. The emission is controllable with respect to a variable signal parameter. An emission-value ascertainment unit is configured to ascertain variation-data indicative of an emission-value variation of signal-parameter values of the signal parameters. A transmitter-control unit is configured to control operation of the transmitter device for transmitting the communication signals according to the ascertained emission-value variation. Also, a receiver-control unit is configured to control a provision, to the receiver device, of control-data indicative of the signal-parameter value used. This advantageously enables trusted receiver devices to perform RF-based activity sensing while preventing illegitimate RF-based eavesdropping.

Other variations to the disclosed embodiments can be understood and effected by those skilled in the art in practicing the claimed invention, from a study of the drawings, the disclosure, and the appended claims.

In the claims, the word "comprising" does not exclude other elements or steps, and the indefinite article "a" or "an" does not exclude a plurality.

A single unit or device may fulfill the functions of several items recited in the claims. The mere fact that certain measures are recited in mutually different dependent claims does not indicate that a combination of these measures cannot be used to advantage.

A computer program may be stored/distributed on a suitable medium, such as an optical storage medium or a solid-state medium, supplied together with or as part of other hardware, but may also be distributed in other forms, such as via the Internet or other wired or wireless telecommunication systems.

Any reference signs in the claims should not be construed as limiting the scope.

## Claims

1. A signal-emission control device (100) for preventing illegitimate use of wireless radiofrequency, RF, communication signals for subject sensing by controlling emission of wireless radiofrequency communication signals (Sᵢ) in a wireless communication network (140) that includes at least one wireless transmitter device (152) and at least one wireless receiver device (154), the emission being controllable with respect to one or more variable signal parameters (P), the signal-emission control device (100) comprising:
- an emission-value ascertainment unit (102) configured to ascertain variation-data indicative of an emission-value variation of signal-parameter values of one or more of the signal parameters that include at least a signal power, wherein, the signal parameters are parameters of the RF communication signals that are influenceable by an activity state of a subject within or through the path that the RF communication signals travel from the at least one transmitter device to the at least one receiver device;
- a transmitter-control unit (104) connected to the emission-value ascertainment unit (102) and configured to control operation of the at least one of the transmitter devices (152) for transmitting the wireless radiofrequency communication signals (S) according to the ascertained emission-value variation of the respective signal-parameter value such that the wireless radiofrequency communication signals, at the at least one wireless receiver device, have signal parameter values that depend on the variation-data; and
- a receiver-control unit (106) connected to the emission-value ascertainment unit (102) and configured to control a provision, to at least one of the wireless receiver devices (154) of the communication network (140), of control-data (CD) indicative of the signal-parameter value of the one or more signal parameters according to which the transmitter device (152) has emitted the wireless radiofrequency communication signal (S).

2. The signal-emission control device of claim 1, wherein the emission-value ascertainment unit (102) is configured to ascertain variation-data indicative of the emission-value variation of the signal-parameter value (V1, V2) of one or more signal parameters (P) that further include at least one of a signal center frequency, a signal beam-form of the emitted wireless radiofrequency communication signal (S), or any combination thereof.

3. The signal-emission control device (200) of claim 1 or 2, wherein the emission-value ascertainment unit (202) comprises a context-data ascertainment unit (208) that is configured to ascertain network-context data pertaining to the devices (152, 154) in the wireless communication network (140) or to the wireless radiofrequency communication signals (Sᵢ) provided or received by the devices (152, 154) in the wireless communication network (140), and wherein the emission-value ascertainment unit (202) is configured to determine the variation-data using predetermined associations between the network-context data and the signal-parameter values (Vi).

4. The signal-emission control device (200) of claim 3, wherein the context-data ascertainment (208) unit is further configured to determine, using the network-context data, device-position information indicative of an installation-location of the devices (152, 154) belonging to the communication network (140) or of a distance amount between the devices, and to determine the variation-data using predetermined associations between the installation-location or the distance amount and the signal-parameter values (Vi).

5. The signal-emission control device (200) of claim 3 or 4, wherein the context-data ascertainment unit (208) is further configured to ascertain signal-data indicative of reception-signal-parameter values of the one or more signal parameters of the wireless radiofrequency communication signals received by the at least one wireless receiver device during a predetermined monitoring time-span, and wherein the emission-value ascertainment unit is configured to determine the variation data in accordance with the ascertained reception-signal-parameter values.

6. The signal-emission control device (200) of any of the preceding claims, further comprising:
- a scheduling unit (210) configured to ascertain operation-trigger data indicative of predetermined operation-conditions that have to be fulfilled for activating control of emission of the wireless radiofrequency communication signals in accordance with the ascertained emission-value variation of the respective signal-parameter value, and wherein
- the transmitter control unit (204) is further connected to the scheduling unit (210) and configured to determine whether the predetermined operation-conditions are fulfilled and to control the operation of the respective wireless transmitter device according to the variation-data further upon fulfilment of the operation-conditions.

7. The signal-emission control device (212) of any of the preceding claims, further comprising an encryption unit (212) connected to the receiver-control unit and configured to encrypt the control data (CD) before being provided to the respective receiver device (154).

8. A wireless transmitter device (252) for controllably emitting wireless radiofrequency communication signals (Sᵢ) in accordance with a respective signal-parameter value (V1, V2) of one or more signal parameters (P), the transmitter device comprising:
- a signal-emission control device (200) according to any of the preceding claims; and
- a radiofrequency communication signal emission unit (256) connected to the signal-emission control device and configured to provide the wireless radiofrequency communication signals in accordance with the emission-value variation ascertained by the signal-emission control device.

9. The wireless transmitter device (252) of claim 8, wherein the receiver control unit is configured to provide the control-data in the respective wireless radiofrequency communication signal that has been transmitted using the respective signal-parameter value.

10. A wireless receiver device (254), comprising:
- a radiofrequency communication signal receiving unit (258), configured to receive wireless radiofrequency communication signals (Sᵢ) from a transmitter device;
- a control-data input unit (260), configured to receive, under control of a signal-emission control device in accordance with any one of the claims 1 to 7, control-data (CD) indicative of the signal-parameter value of the one or more signal parameter according to which the transmitter device (152) has emitted the wireless radiofrequency communication signal (S); and
- a subject-activity determination unit connected (262) to the radiofrequency communication signal receiving unit and to the control-data input unit and configured:
- to determine a reception-signal value of the one or more of the signal parameters;
- to determine a subject-activity of a subject within an activity sensing volume based on the determined reception-signal value and on the received control data indicative of the signal-parameter value of the respective wireless communication signal.

11. The wireless receiver device (254) of claim 10, further comprising a decryption unit (264) connected to the control-data input unit (260) and to the subject-activity determination unit (262) and configured to decrypt encrypted control-data (CD).

12. A subject-activity sensing arrangement (150) configured to determine a subject activity of a subject (4) within an activity-sensing volume based on variations of a value of at least one signal parameter (P) of wireless radiofrequency communication signals (Sᵢ) provided by at least one transmitter device (152) to an at least one receiver device (152), the subject-activity sensing arrangement comprising at least one signal-emission control device according to any one of the claims 1 to 7, at least one wireless transmitter device configured to provide wireless radiofrequency communication signals with different values of at least one signal-parameter and at least one wireless receiver device according to claim 10 or 11.

13. A method (600) for preventing illegitimate use of wireless radiofrequency, RF, communication signals for subject sensing by controlling operation of a signal-emission control device, for controlling emission of wireless radiofrequency communication signals (Si) in a communication network (140) comprising at least one transmitter device (152) and at least one receiver device (154), the emission being controllable in accordance with a respective signal-parameter value (Vi) of one or more signal parameters (P), the method comprising:
- ascertaining (602) variation-data indicative of an emission-value variation of the respective signal-parameter value of one or more of the signal parameters that include at least a signal power, wherein, the signal parameters are parameters of the RF communication signals that are influenceable by an activity state of a subject within or through the path that the RF communication signals travel from the at least one transmitter device to the at least one receiver device;
- controlling (604) operation of a respective transmitter device (152) for transmitting the wireless radiofrequency communication signals (S) according to the ascertained emission-value variation of the respective signal-parameter value such that the wireless radiofrequency communication signals, at the at least one wireless receiver device, have signal parameter values that depend on the variation-data; and
- controlling (606) a provision of control-data indicative of the signal-parameter value of the one or more signal parameter according to which the transmitter device (152) has emitted the wireless radiofrequency communication signal (S).

14. A method (700) according to claim 13 for controlling operation of a subject-activity sensing arrangement (150) that is configured to determine a subject-activity of a subject (4) within an activity-sensing volume based on variations of a value (V1, V2) of at least one signal parameter P of wireless radiofrequency communication signals provided by at least one transmitter device (152) to an at least one receiver device, the method comprising:
- performing the method (600) of claim 13;
- providing (702) the wireless radiofrequency communication signals in accordance with the emission-value variation ascertained;
- receiving (704) the wireless radiofrequency communication signals and the respective control-data;
- determining (706) a subject-activity of a subject within the activity-sensing volume based on a determined reception-signal value of the received RF communication signal and on the received control data indicative of the signal-parameter value of the respective wireless communication signal.

15. A computer program comprising instructions which, when the program is executed by a computer, cause the computer to carry out the method of claim 13 or 14.

## Patentansprüche

1. Signalemissionssteuervorrichtung (100) zum Verhindern einer unrechtmäßigen Verwendung von Drahtloshochfrequenzkommunikationssignalen, HF-Kommunikationssignalen, zum Erfassen von Subjekten durch Steuern einer Emission von Drahtloshochfrequenzkommunikationssignalen (Sᵢ) in einem Drahtloskommunikationsnetzwerk (140), das mindestens eine drahtlose Sendevorrichtung (152) und mindestens eine drahtlose Empfangsvorrichtung (154) einschließt, wobei die Emission in Bezug auf einen oder mehrere variable Signalparameter (P) steuerbar ist, die Signalemissionssteuervorrichtung (100) umfassend:
- eine Emissionswertermittlungseinheit (102), die konfiguriert ist, um Variationsdaten zu ermitteln, die eine Emissionswertvariation von Signalparameterwerten eines oder mehrerer der Signalparameter angeben, die mindestens eine Signalleistung umfassen, wobei die Signalparameter Parameter der HF-Kommunikationssignale sind, die durch einen Aktivitätszustand eines Subjekts innerhalb oder durch den Pfad, den die HF-Kommunikationssignale von der mindestens einen Sendevorrichtung zu der mindestens einen Empfangsvorrichtung zurücklegen, beeinflussbar sind;
- eine Sendersteuereinheit (104), die mit der Emissionswertermittlungseinheit (102) verbunden ist und konfiguriert ist, um den Betrieb von der mindestens einen der Sendevorrichtungen (152) zum Senden der Drahtloshochfrequenzkommunikationssignale (S) entsprechend der ermittelten Emissionswertvariation des jeweiligen Signalparameterwerts so zu steuern, dass die Drahtloshochfrequenzkommunikationssignale an der mindestens einen Drahtlosempfängervorrichtung Signalparameterwerte aufweisen, die von den Variationsdaten abhängen; und
- eine Empfängersteuerungseinheit (106), die mit der Emissionswertermittlungseinheit (102) verbunden und konfiguriert ist, um für mindestens eine der Drahtlosempfängervorrichtungen (154) des Kommunikationsnetzwerks (140) eine Bereitstellung von Steuerungsdaten (CD) zu steuern, die den Signalparameterwert des einen oder der mehreren Signalparameter angeben, gemäß denen die Sendervorrichtung (152) das Drahtloshochfrequenzkommunikationssignal (S) emittiert hat.

2. Signalemissionssteuervorrichtung nach Anspruch 1, wobei die Emissionswertermittlungseinheit (102) konfiguriert ist, um Variationsdaten zu ermitteln, die die Emissionswertvariation des Signalparameterwerts (V1, V2) eines oder mehrerer Signalparameter (P) angeben, die ferner mindestens eines von einer Signalmittenfrequenz, einer Signalstrahlform des emittierten Drahtloshochfrequenzkommunikationssignals (S) oder eine beliebige Kombination davon einschließen.

3. Signalemissionssteuerungsvorrichtung (200) nach Anspruch 1 oder 2, wobei die Emissionswertermittlungseinheit (202) eine Kontextdatenermittlungseinheit (208) umfasst, die konfiguriert ist, um Netzwerkkontextdaten zu ermitteln, die die Vorrichtungen (152, 154) in dem Drahtloskommunikationsnetzwerk (140) oder die Drahtloshochfrequenzkommunikationssignale (Sᵢ) betreffen, die durch die Vorrichtungen (152, 154) in dem Drahtloskommunikationsnetzwerk (140) bereitgestellt oder empfangen werden, und wobei die Emissionswertermittlungseinheit (202) konfiguriert ist, um die Variationsdaten unter Verwendung vorgegebener Zuordnungen zwischen den Netzwerkkontextdaten und den Signalparameterwerten (Vᵢ) zu bestimmen.

4. Signalemissionssteuerungsvorrichtung (200) nach Anspruch 3, wobei die Kontextdatenermittlungseinheit (208) ferner konfiguriert ist, um unter Verwendung der Netzwerkkontextdaten Vorrichtungspositionsinformationen zu bestimmen, die einen Installationsort der Vorrichtungen (152, 154), die zu dem Kommunikationsnetzwerk (140) gehören, oder einen Abstand zwischen den Vorrichtungen angeben, und um die Variationsdaten unter Verwendung vorgegebener Zuordnungen zwischen dem Installationsort oder dem Abstand und den Signalparameterwerten (Vᵢ) zu bestimmen.

5. Signalemissionssteuerungsvorrichtung (200) nach Anspruch 3 oder 4, wobei die Kontextdatenermittlungseinheit (208) ferner konfiguriert ist, um Signaldaten zu ermitteln, die Empfangssignalparameterwerte des einen oder der mehreren Signalparameter der Drahtloshochfrequenzkommunikationssignale angeben, die durch die mindestens eine drahtlose Empfängervorrichtung während einer vorgegebenen Überwachungszeitspanne empfangen werden, und wobei die Emissionswertermittlungseinheit konfiguriert ist, um die Variationsdaten gemäß den ermittelten Empfangssignalparameterwerten zu bestimmen.

6. Signalemissionssteuervorrichtung (200) nach einem der vorstehenden Ansprüche, ferner umfassend:
- eine Planungseinheit (210), die konfiguriert ist, um Betriebsauslösedaten zu ermitteln, die zuvor bestimmte Betriebsbedingungen angeben, die zum Aktivieren einer Steuerung der Emission der Drahtloshochfrequenzkommunikationssignale gemäß der ermittelten Emissionswertvariation des jeweiligen Signalparameterwerts erfüllt sein müssen, und wobei
- die Sendersteuereinheit (204) ferner mit der Planungseinheit (210) verbunden ist und konfiguriert ist, um zu bestimmen, ob die zuvor bestimmten Betriebsbedingungen erfüllt sind, und um den Betrieb der jeweiligen Drahtlossendervorrichtung gemäß den Variationsdaten weiter zu steuern, wenn die Betriebsbedingungen erfüllt sind.

7. Signalemissionssteuerungsvorrichtung (212) nach einem der vorstehenden Ansprüche, die ferner eine Verschlüsselungseinheit (212) umfasst, die mit der Empfängersteuerungseinheit verbunden und konfiguriert ist, um die Steuerungsdaten (CD) zu verschlüsseln, bevor sie der jeweiligen Empfängervorrichtung (154) bereitgestellt werden.

8. Drahtlossendervorrichtung (252) zum steuerbaren Emittieren von Drahtloshochfrequenzkommunikationssignalen (Sᵢ) gemäß einem jeweiligen Signalparameterwert (V1, V2) eines oder mehrerer Signalparameter (P), wobei die Sendervorrichtung umfasst:
- eine Signalemissionssteuervorrichtung (200) nach einem der vorstehenden Ansprüche; und
- eine Hochfrequenzkommunikationssignalemissionseinheit (256), die mit der Signalemissionssteuervorrichtung verbunden ist und konfiguriert ist, um die Drahtloshochfrequenzkommunikationssignale gemäß der Emissionswertvariation bereitzustellen, die durch die Signalemissionssteuervorrichtung ermittelt wird.

9. Sendervorrichtung (252) nach Anspruch 8, wobei die Empfängersteuereinheit konfiguriert ist, um die Steuerdaten in dem jeweiligen Drahtloshochfrequenzkommunikationssignal bereitzustellen, das unter Verwendung des jeweiligen Signalparameterwerts gesendet wurde.

10. Drahtlosempfängervorrichtung (254), die umfasst:
- eine Hochfrequenzkommunikationssignalempfangseinheit (258), die konfiguriert ist, um Drahtloshochfrequenzkommunikationssignale (Sᵢ) von einer Sendervorrichtung zu empfangen;
- eine Steuerungsdateneingabeeinheit (260), die konfiguriert ist, um unter der Steuerung einer Signalemissionssteuerungsvorrichtung nach einem der Ansprüche 1 oder 7, Steuerungsdaten (CD) zu empfangen, die den Signalparameterwert des einen oder der mehreren Signalparameter angeben, gemäß denen die Sendervorrichtung (152) das Drahtloshochfrequenzkommunikationssignal (S) emittiert hat; und
- eine Personenaktivitätsbestimmungseinheit, die mit der Hochfrequenzkommunikationssignalempfangseinheit und mit der Steuerungsdateneingabeeinheit verbunden (262) und konfiguriert ist:
- um einen Empfangssignalwert des einen oder der mehreren Signalparameter zu bestimmen;
- um eine Subjektaktivität eines Subjekts innerhalb eines Aktivitätserfassungsvolumens basierend auf dem bestimmten Empfangssignalwert und auf den empfangenen Steuerdaten zu bestimmen, die den Signalparameterwert des jeweiligen Drahtloskommunikationssignals angeben.

11. Drahtlosempfängervorrichtung (254) nach Anspruch 10, die ferner eine Entschlüsselungseinheit (264) umfasst, die mit der Steuerungsdateneingabeeinheit (260) und mit der Personenaktivitätsbestimmungseinheit (262) verbunden und konfiguriert ist, um verschlüsselte Steuerungsdaten (CD) zu entschlüsseln.

12. Subjektaktivitäterfassungsanordnung (150), die konfiguriert ist, um eine Subjektaktivität eines Subjekts (4) innerhalb eines Aktivitätserfassungsvolumens basierend auf Variationen eines Werts mindestens eines Signalparameters (P) von Drahtloshochfrequenzkommunikationssignalen (Sᵢ) zu bestimmen, die durch mindestens eine Sendervorrichtung (152) an mindestens eine Empfängervorrichtung (152) bereitgestellt werden, die Subjektaktivitäterfassungsanordnung umfassend mindestens eine Signalemissionssteuervorrichtung nach einem der Ansprüche 1 bis 17, mindestens eine Drahtlossendervorrichtung, die konfiguriert ist, um Drahtloshochfrequenzkommunikationssignale mit unterschiedlichen Werten von mindestens einem Signalparameter bereitzustellen, und mindestens eine Drahtlosempfängervorrichtung nach Anspruch 10 oder 11.

13. Verfahren (600) zum Verhindern einer unrechtmäßigen Verwendung von Drahtloshochfrequenzkommunikationssignalen, HF-Kommunikationssignalen, zum Erfassen eines Subjekts durch Steuern des Betriebs einer Signalemissionssteuervorrichtung zum Steuern einer Emission von Drahtloshochfrequenzkommunikationssignalen (Si) in einem Kommunikationsnetzwerk (140), umfassend mindestens eine Sendevorrichtung (152) und mindestens eine Empfangsvorrichtung (154), wobei die Emission gemäß einem jeweiligen Signalparameterwert (Vᵢ) eines oder mehrerer Signalparameter (P) steuerbar ist, das Verfahren umfassend:
- Ermitteln (602) von Variationsdaten, die eine Emissionswertvariation von dem jeweiligen Signalparameterwerte eines oder mehrerer der Signalparameter angeben, die mindestens eine Signalleistung einschließen, wobei die Signalparameter Parameter der HF-Kommunikationssignale sind, die durch einen Aktivitätszustand eines Subjekts innerhalb oder durch den Pfad, den die HF-Kommunikationssignale von der mindestens einen Sendevorrichtung zu der mindestens einen Empfangsvorrichtung zurücklegen, beeinflussbar sind;
- Steuern (604) des Betriebs einer jeweiligen Sendervorrichtung (152) zum Senden der Dahtloshochfrequenzkommunikationssignale (S) entsprechend der ermittelten Emissionswertvariation des jeweiligen Signalparameterwerts so, dass die Dahtloshochfrequenzkommunikationssignale an der mindestens einen Dahtlosempfängervorrichtung Signalparameterwerte aufweisen, die von den Variationsdaten abhängen; und
- Steuern (606) einer Bereitstellung von Steuerungsdaten, die den Signalparameterwert des einen oder der mehreren Signalparameter angeben, gemäß denen die Sendervorrichtung (152) das Drahtloshochfrequenzkommunikationssignal (S) emittiert hat.

14. Verfahren (700) nach Anspruch 13 zum Steuern des Betriebs einer Personenaktivitätserfassungsanordnung (150), die konfiguriert ist, um eine Personenaktivität einer Person (4) innerhalb eines Aktivitätserfassungsvolumens basierend auf Variationen eines Werts (V1, V2) mindestens eines Signalparameters P von Drahtloshochfrequenzkommunikationssignalen zu bestimmen, die durch mindestens eine Sendervorrichtung (152) für mindestens eine Empfängervorrichtung bereitgestellt werden, wobei das Verfahren umfasst:
- Durchführen des Verfahrens (600) nach Anspruch 13;
- Bereitstellen (702) der Drahtloshochfrequenzkommunikationssignale gemäß der ermittelten Emissionswertvariation;
- Empfangen (704) der Drahtloshochfrequenzkommunikationssignale und der jeweiligen Steuerungsdaten;
- Bestimmen (706) einer Subjektaktivität eines Subjekts innerhalb des Aktivitätserfassungsvolumens basierend auf einem bestimmten Empfangssignalwert des empfangenen HF-Kommunikationssignals und auf den empfangenen Steuerdaten, die den Signalparameterwert des jeweiligen Drahtloskommunikationssignals angeben.

15. Computerprogramm, das Anweisungen umfasst, die, wenn das Programm durch einen Computer ausgeführt wird, den Computer veranlassen, das Verfahren nach Anspruch 13 oder 14 auszuführen.

## Revendications

1. Dispositif de commande d'émission de signal (100) permettant d'empêcher une utilisation illégitime de signaux de communication radiofréquence, **RF** sans fil pour une détection de sujet en commandant une émission de signaux de communication radiofréquence sans fil (Sᵢ) dans un réseau de communication sans fil (140) qui comporte au moins un dispositif transmetteur sans fil (152) et au moins un dispositif récepteur sans fil (154), l'émission pouvant être commandée par rapport à un ou plusieurs paramètres de signal variables (P), le dispositif de commande d'émission de signal (100) comprenant :
- une unité de vérification de valeur d'émission (102) configurée pour vérifier des données de variation indiquant une variation de valeur d'émission de valeurs de paramètre de signal d'un ou de plusieurs parmi les paramètres de signal qui comportent au moins une puissance de signal, dans lequel, les paramètres de signal sont des paramètres des signaux de communication RF qui peuvent être influencés par un état d'activité d'un sujet à l'intérieur ou à travers le chemin que les signaux de communication RF parcourent depuis l'au moins un dispositif transmetteur jusqu'à l'au moins un dispositif récepteur ;
- une unité de commande de transmetteur (104) connectée à l'unité de vérification de valeur d'émission (102) et configurée pour commander le fonctionnement de l'au moins un dispositif transmetteur (152) pour transmettre les signaux de communication radiofréquence sans fil (S) selon la variation de valeur d'émission vérifiée de la valeur de paramètre de signal respective de telle sorte que les signaux de communication radiofréquence sans fil, au niveau de l'au moins un dispositif récepteur sans fil, ont des valeurs de paramètre de signal qui dépendent des données de variation ; et
- une unité de commande de récepteur (106) connectée à l'unité de vérification de valeur d'émission (102) et configurée pour commander une fourniture, à au moins l'un parmi les dispositifs récepteurs sans fil (154) du réseau de communication (140), de données de commande (CD) indiquant la valeur de paramètre de signal du ou des paramètres de signal selon lesquels le dispositif transmetteur (152) a émis le signal de communication radiofréquence sans fil (S).

2. Dispositif de commande d'émission de signal selon la revendication 1, dans lequel l'unité de vérification de valeur d'émission (102) est configurée pour vérifier des données de variation indiquant la variation de valeur d'émission de la valeur de paramètre de signal (V1, V2) d'un ou plusieurs paramètres de signal (P) qui comportent en outre au moins l'une parmi une fréquence centrale de signal, une forme de faisceau de signal du signal de communication radiofréquence sans fil (S) émis, ou une quelconque combinaison de celles-ci.

3. Dispositif de commande d'émission de signal (200) selon la revendication 1 ou 2, dans lequel l'unité de vérification de valeur d'émission (202) comprend une unité de vérification de données de contexte (208) qui est configurée pour vérifier des données de contexte de réseau relatives aux dispositifs (152, 154) dans le réseau de communication sans fil (140) ou aux signaux de communication radiofréquence sans fil (Sᵢ) fournis ou reçus par les dispositifs (152, 154) dans le réseau de communication sans fil (140), et dans lequel l'unité de vérification de valeur d'émission (202) est configurée pour déterminer les données de variation à l'aide d'associations prédéterminées entre les données de contexte de réseau et les valeurs de paramètre de signal (Vᵢ).

4. Dispositif de commande d'émission de signal (200) selon la revendication 3, dans lequel l'unité de vérification de données de contexte (208) est en outre configurée pour déterminer, à l'aide des données de contexte de réseau, des informations de position de dispositif indiquant un emplacement d'installation des dispositifs (152, 154) appartenant au réseau de communication (140) ou une distance entre les dispositifs, et pour déterminer les données de variation à l'aide d'associations prédéterminées entre l'emplacement d'installation ou la distance et les valeurs de paramètre de signal (Vᵢ).

5. Dispositif de commande d'émission de signal (200) selon la revendication 3 ou 4, dans lequel l'unité de vérification de données de contexte (208) est en outre configurée pour vérifier des données de signal indiquant des valeurs de paramètre de signal de réception du ou des paramètres de signal des signaux de communication radiofréquence sans fil reçus par l'au moins un dispositif récepteur sans fil pendant un laps de temps de surveillance prédéterminé, et dans lequel l'unité de vérification de valeur d'émission est configurée pour déterminer les données de variation conformément aux valeurs de paramètre de signal de réception vérifiées.

6. Dispositif de commande d'émission de signal (200) selon l'une quelconque des revendications précédentes, comprenant en outre :
- une unité de programmation (210) configurée pour vérifier des données de déclenchement de fonctionnement indiquant des conditions de fonctionnement prédéterminées qui doivent être satisfaites pour activer une commande d'émission des signaux de communication radiofréquence sans fil conformément à la variation de valeur d'émission vérifiée de la valeur de paramètre de signal respective, et dans lequel
- l'unité de commande de transmetteur (204) est en outre connectée à l'unité de programmation (210) et configurée pour déterminer si les conditions de fonctionnement prédéterminées sont satisfaites et pour commander le fonctionnement du dispositif transmetteur sans fil respectif selon les données de variation en outre lorsque les conditions de fonctionnement sont satisfaites.

7. Dispositif de commande d'émission de signal (212) selon l'une quelconque des revendications précédentes, comprenant en outre une unité de chiffrement (212) connectée à l'unité de commande de récepteur et configurée pour chiffrer les données de commande (CD) avant qu'elles ne soient fournies au dispositif récepteur (154) respectif.

8. Dispositif transmetteur sans fil (252) permettant d'émettre de manière pouvant être commandée des signaux de communication radiofréquence sans fil (Sᵢ) conformément à une valeur de paramètre de signal (V1, V2) respective d'un ou plusieurs paramètres de signal (P), le dispositif transmetteur comprenant :
- un dispositif de commande d'émission de signal (200) selon l'une quelconque des revendications précédentes ; et
- une unité d'émission de signal de communication radiofréquence (256) connectée au dispositif de commande d'émission de signal et configurée pour fournir les signaux de communication radiofréquence sans fil conformément à la variation de valeur d'émission vérifiée par le dispositif de commande d'émission de signal.

9. Dispositif transmetteur sans fil (252) selon la revendication 8, dans lequel l'unité de commande de récepteur est configurée pour fournir les données de commande dans le signal de communication radiofréquence sans fil respectif qui a été transmis à l'aide de la valeur de paramètre de signal respective.

10. Dispositif récepteur sans fil (254), comprenant :
- une unité de réception de signal de communication radiofréquence (258), configurée pour recevoir des signaux de communication radiofréquence sans fil (Sᵢ) en provenance d'un dispositif transmetteur ;
- une unité d'entrée de données de commande (260), configurée pour recevoir, sous une commande d'un dispositif de commande d'émission de signal conformément à l'une quelconque des revendications 1 à 7, des données de commande (CD) indiquant la valeur de paramètre de signal du ou des paramètres de signal selon lesquels le dispositif transmetteur (152) a émis le signal de communication radiofréquence sans fil (S) ; et
- une unité de détermination d'activité de sujet connectée (262) à l'unité de réception de signal de communication radiofréquence et à l'unité d'entrée de données de commande et configurée :
- pour déterminer une valeur de signal de réception du ou des paramètres de signal ;
- pour déterminer une activité de sujet d'un sujet à l'intérieur d'un volume de détection d'activité sur la base de la valeur de signal de réception déterminée et des données de commande reçues indiquant la valeur de paramètre de signal du signal de communication sans fil respectif.

11. Dispositif récepteur sans fil (254) selon la revendication 10, comprenant en outre une unité de déchiffrement (264) connectée à l'unité d'entrée de données de commande (260) et à l'unité de détermination d'activité de sujet (262) et configurée pour déchiffrer des données de commande (CD) chiffrées.

12. Agencement de détection d'activité de sujet (150) configuré pour déterminer une activité de sujet d'un sujet (4) à l'intérieur d'un volume de détection d'activité sur la base de variations d'une valeur d'au moins un paramètre de signal (P) de signaux de communication radiofréquence sans fil (Sᵢ) fournis par au moins un dispositif transmetteur (152) à au moins un dispositif récepteur (152), l'agencement de détection d'activité de sujet comprenant au moins un dispositif de commande d'émission de signal selon l'une quelconque des revendications 1 à 7, au moins un dispositif transmetteur sans fil configuré pour fournir des signaux de communication radiofréquence sans fil avec différentes valeurs d'au moins un paramètre de signal et au moins un dispositif récepteur sans fil selon la revendication 10 ou 11.

13. Procédé (600) permettant d'empêcher une utilisation illégitime de signaux de communication radiofréquence, RF, sans fil pour une détection de sujet en commandant un fonctionnement d'un dispositif de commande d'émission de signal, pour commander une émission de signaux de communication radiofréquence sans fil (Sᵢ) dans un réseau de communication (140) comprenant au moins un dispositif transmetteur (152) et au moins un dispositif récepteur (154), l'émission pouvant être commandée conformément à une valeur de paramètre de signal respective (Vᵢ) d'un ou plusieurs paramètres de signal (P), le procédé comprenant :
- la vérification (602) de données de variation indiquant une variation de valeur d'émission de la valeur de paramètre de signal respective d'un ou de plusieurs parmi les paramètres de signal qui comportent au moins une puissance de signal, dans lequel, les paramètres de signal sont des paramètres des signaux de communication RF qui peuvent être influencés par un état d'activité d'un sujet à l'intérieur ou à travers le chemin que les signaux de communication RF parcourent depuis l'au moins un dispositif transmetteur jusqu'à l'au moins un dispositif récepteur ;
- la commande (604) d'un fonctionnement d'un dispositif transmetteur respectif (152) pour transmettre les signaux de communication radiofréquence sans fil (S) selon la variation de valeur d'émission vérifiée de la valeur de paramètre de signal respective, de telle sorte que les signaux de communication radiofréquence sans fil, au niveau d'au moins un dispositif récepteur sans fil, ont des valeurs de paramètre de signal qui dépendent des données de variation ; et
- la commande (606) d'une fourniture de données de commande indiquant la valeur de paramètre de signal du ou des paramètres de signal selon lesquels le dispositif transmetteur (152) a émis le signal de communication radiofréquence sans fil (S).

14. Procédé (700) selon la revendication 13 permettant de commander un fonctionnement d'un agencement de détection d'activité de sujet (150) qui est configuré pour déterminer une activité de sujet d'un sujet (4) à l'intérieur d'un volume de détection d'activité sur la base de variations d'une valeur (V1, V2) d'au moins un paramètre de signal P de signaux de communication radiofréquence sans fil fournis par au moins un dispositif transmetteur (152) à au moins un dispositif récepteur, le procédé comprenant :
- la réalisation du procédé (600) selon la revendication 13 ;
- la fourniture (702) des signaux de communication radiofréquence sans fil conformément à la variation de valeur d'émission vérifiée ;
- la réception (704) des signaux de communication radiofréquence sans fil et des données de commande respectives ;
- la détermination (706) d'une activité de sujet d'un sujet à l'intérieur du volume de détection d'activité sur la base d'une valeur de signal de réception déterminée du signal de communication RF reçu et des données de commande reçues indiquant la valeur de paramètre de signal du signal de communication sans fil respectif.

15. Programme informatique comprenant des instructions qui, lorsque le programme est exécuté par un ordinateur, amènent l'ordinateur à mettre en œuvre le procédé selon la revendication 13 ou 14.
